# EUROPÄISCHE PATENTANMELDUNG

(11) **EP 1 321 659 A2**
(43) Veröffentlichungstag der Anmeldung: **25.06.2003**
(21) Anmeldenummer: 02028304.0
(22) Anmeldetag: 17.12.2002
(51) Int. Cl.: F02M 35/024, F02M 25/08

(54) **Luftansaugeinrichtung eines Verbrennungsmotors**

(30) Priorität: 22.12.2001 DE 10163922
(71) Anmelder: MAHLE Filtersysteme GmbH, 70376 Stuttgart (DE)
(72) Erfinder: Rohde, Frank, 73027 Stuttgart (DE); Schmidt, Christof, 73079 Süssen (DE)
(74) Vertreter: Patentanwalts-Partnerschaft, Rotermund + Pfusch + Bernhard

(57) **Zusammenfassung**

Zum Schutz der Umwelt vor aus einer Luftansaugeinrichtung eines Verbrennungsmotors bei abgestelltem Motor ausströmenden schädlichen Emissionen ist innerhalb des durchströmten Raumes der Luftansaugeinrichtung ein diese Einrichtung durchströmendes Strömungsmedium kontaktierendes, Kohlenwasserstoffe adsorbierendes Material vorgesehen.

## Beschreibung

Die Erfindung betrifft eine Luftansaugeinrichtung eines Verbrennungsmotors mit insbesondere einem Ansaugluftfilter.

Die Erfindung beschäftigt sich mit dem Problem, die Umwelt vor nach dem Abstellen eines Verbrennungsmotors möglicherweise aus der Luftansaugeinrichtung austretenden schädlichen Emissionen zu schützen.

Gelöst wird dieses Problem durch die Ausbildung einer gattungsgemäßen Luftansaugeinrichtung nach den kennzeichnenden Merkmalen des Patentanspruchs 1.

Vorteilhafte und zweckmäßige Ausgestaltungen sind Gegenstand der Unteransprüche.

Die Erfindung beruht auf dem allgemeinen Gedanken, innerhalb des Strömungsbereiches der Luftansaugeinrichtung, insbesondere innerhalb des von dem üblichen Ansaugluftfilter gegenüber der Atmosphäre begrenzten Innenraums ein adsorbierendes Material vorzusehen, das von bei abgestelltem Verbrennungsmotor in die Atmosphäre nach außen abfließenden Gasen kontaktiert wird. Dieses Kontaktieren kann dadurch gegeben sein, daß das Strömungsmedium das adsorbierende Material in der Art eines Filtermaterials durchströmt oder darin, daß das Strömungsmedium das adsorptionsfähige Material lediglich umströmt.

Versuche haben gezeigt, daß es ausreichend sein kann, wenn das in die Atmosphäre austretende Strömungsmedium das adsorbierende Material lediglich umströmt, wobei in einem Strömungsquerschnitt der Luftansaugeinrichtung ein Teil der in die Atmosphäre austretenden Gase auch in einem Teilstrom das adsorbierende Material durchströmen kann. Der zuletzt genannte Fall stellt insbesondere dann eine ausreichende Lösung dar, wenn schädliche Emissionen wie Kohlenwasserstoffe lediglich unterhalb eines vorgegebenen Grenzwertes sicher zu limitieren sind. Zweckmäßigerweise ist das adsorbierende Material hierbei in einem Bereich zwischen dem Motor und einem direkt an die Atmosphäre angrenzenden Bereich eines üblichen Ansaugluftfilters vorgesehen, wobei dieser an die Atmosphäre angrenzende Bereich kein adsorbierendes Material enthält.

Eine besonders vorteilhafte Ausgestaltung kann darin bestehen, daß zumindest Bereiche der von dem Strömungsmedium kontaktierten Innenwände der Luftansaugeinrichtung mit adsorbierendem Material ausgekleidet sind.

Möglich ist es auch, das adsorbierende Material in irgendeiner Form in das übliche Ansaugluftfilter zu integrieren oder mit diesem zu verbinden.

Eine vorteilhafte Ausführung kann auch darin bestehen, das adsorbierende Material in der Form eines Zusatzfilters auszubilden, das wahlweise je nach Bedarf und gegebenenfalls gesetzlichen Umweltvorschriften in eine Luftansaugeinrichtung einsetzbar ist. Bei einer bedarfsweisen Einsetzbarkeit des adsorbierenden Materials in der Form eines Einsetzteiles ist es zweckmäßig, eine Fixierung des Einsetzteiles vorzusehen, die nicht ohne weiteres gelöst werden kann. Hierdurch soll verhindert werden, daß das Adsorptionsmaterial von dem Benutzer eines Fahrzeuges mit einem entsprechend ausgerüsteten Verbrennungsmotor absichtlich oder auch unabsichtlich entfernt werden kann, da hierdurch der durch das adsorbtionsfähige Material beabsichtigte Umweltschutz aufgehoben wäre.

Ein vorteilhaftes Ausführungsbeispiel ist in der Zeichnung dargestellt.

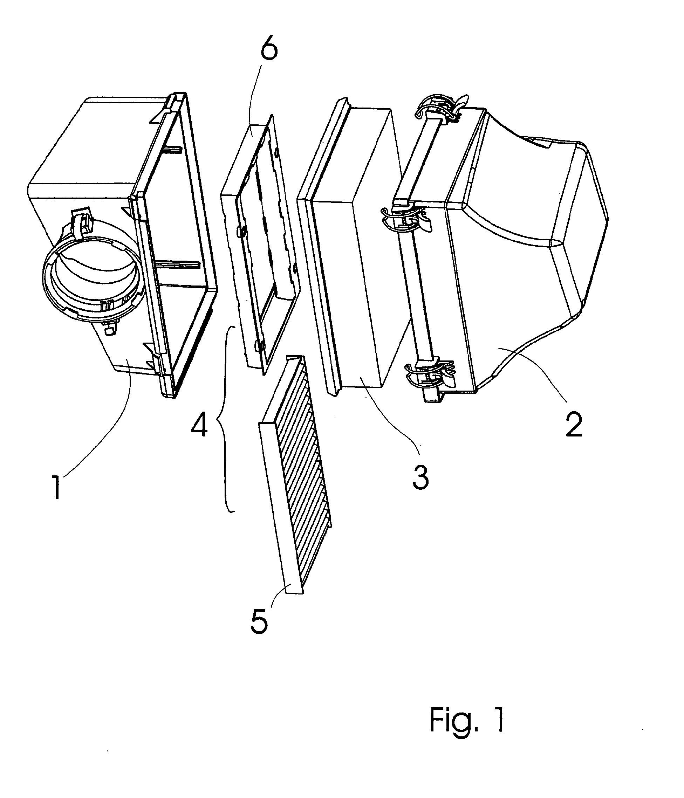

In dieser zeigt die einzige
- Fig. 1: eine perspektivische Explosionsdarstellung eines an die Atmosphäre angrenzenden Bereiches einer Luftansaugeinrichtung eines Verbrennungsmotors, in dem sich das übliche, austauschbare Ansaugluftfilter befindet.

In der Zeichnung links befindet sich ein fest mit dem Verbrennungsmotor verbundenes erstes Gehäuseteil 1 der Luftansaugeinrichtung eines Verbrennungsmotors. An dieses erste Gehäuseteil 1 ist ein zweites Gehäuseteil 2, durch das die Verbrennungsluft für den Motor angesaugt wird, lösbar dicht ansetzbar. In den Strömungsraum zwischen den beiden Gehäuseteilen 1, 2 ist austauschbar einsetzbar ein übliches Luftfilterelement 3.

In das erste Gehäuseteil 1 ist ein Zusatzfilterelement 4, bestehend aus einem plattenförmigen, zick-zack-förmig gefalteten aktivkohlehaltigen Vlies 5 und einem Rahmen 6, in den dieses Vlies 5 einschiebbar ist, einsetzbar. Der in das erste Gehäuseteil 1 eingesetzte Rahmen 2 mit dem aktivkohlehaltigen Vlies ist dort über Arretierungsmittel derart fixierbar, daß zumindest keine unbeabsichtigte Entnahme bei einem Wechsel des Luftfilterelementes 3 möglich ist.

## Patentansprüche

1. Luftansaugeinrichtung eines Verbrennungsmotors,
**dadurch gekennzeichnet,**
**daß** innerhalb des durchströmten Raumes der Luftansaugeinrichtung ein Kohlenwasserstoffe adsorbierendes Material (5) vorgesehen ist, welches ein diese Einrichtung durchströmendes Strömungsmedium kontaktiert.

2. Einrichtung nach Anspruch 1,
**dadurch gekennzeichnet,**
**daß** das adsorbierende Material (5) in der Art eines Filterelementes zumindest in einen Teil des Strömungsquerschnittes der Luftansaugeinrichtung zur zumindest teilweisen Durchströmung durch das Strömungsmedium eingesetzt ist.

3. Einrichtung nach Anspruch 1 oder 2,
**dadurch gekennzeichnet,**
**daß** das adsorbierende Material zumindest teilweise als Innenwandverkleidung der Luftansaugeinrichtung ausgebildet ist.

4. Einrichtung nach Anspruch 1 oder 2,
**dadurch gekennzeichnet,**
**daß** das adsorbierende Material in der Form eines herausnehmbaren Filterelementes ausgebildet ist.

5. Einrichtung nach Anspruch 4,
**dadurch gekennzeichnet,**
**daß** das in der Form eines herausnehmbaren Filterelementes ausgebildete adsorbierende Material als Zusatzfilter zu einem nicht adsorptionsfähigen, üblichen Ansaugluftfilter ausgebildet ist.

6. Einrichtung nach einem der vorhergehenden Ansprüche,
**dadurch gekennzeichnet,**
**daß** das adsorbierende Material in einem Bereich zwischen dem Motor und einem kein adsorbierendes Material enthaltenden Ansaugluftfilterbereich angeordnet ist.

7. Einrichtung nach einem der vorhergehenden Ansprüche,
**dadurch gekennzeichnet,**
**daß** das adsorbierende Material zumindest im wesentlichen aus Aktivkohle besteht.
